# EUROPÄISCHE PATENTSCHRIFT

(11) **EP 0 351 850 B1**
(45) Veröffentlichungstag und Bekanntmachung des Hinweises auf die Patenterteilung: **24.02.1993**
(21) Anmeldenummer: 89113347.2
(22) Anmeldetag: 20.07.1989
(51) Int. Cl.: B01D 46/52

(54) **Filterelement**
Filter element
Elément filtrant

(30) Priorität: 20.07.1988 DE 3824622
(43) Veröffentlichungstag der Anmeldung: 24.01.1990
(73) Patentinhaber: Rapp, Peter, D-74629 Pfedelbach (DE); Handte, Siegfried, D-78532 Tuttlingen (DE)
(72) Erfinder: Rapp, Peter, D-74629 Pfedelbach (DE); Handte, Siegfried, D-78532 Tuttlingen (DE)
(74) Vertreter: Müller, Hans, Dipl.-Ing.

(56) Entgegenhaltungen:
- EP-A- 0 228 512
- DE-A- 3 304 350
- FR-A- 2 324 342
- US-A- 3 458 977

## Beschreibung

### TECHNISCHES GEBIET

Die Erfindung betrifft ein Filterelement, bei dem das Filtermedium aus textilem, papiernem oder ähnlichem Material besteht. Die Materialbahnen sind dabei balgartig gefaltet.

Derartige Filterelemente werden beispielsweise bei der Feinstaubabscheidung aus Gas- bzw. Luftströmen eingesetzt. Die in dem Gas bzw. in der Luft vorhandenen abzuscheidenden Partikel setzen sich dabei an der Oberfläche des Filtermediums ab. Damit der Filter nicht unwirksam wird, wird er von Zeit zu Zeit gereinigt, was beispielsweise durch Rütteln oder durch Gegenblasen von Druckluft erfolgen kann.

### STAND DER TECHNIK

Es sind Filterpatronen bekannt, die einen hohlen, kreiszylindrischen Aufbau aufweisen. Die Mantelfläche dieses Zylinders wird von einer textilen, papiernen oder ähnlichen Materialbahn gebildet, die balgartig gefaltet ist. Die Faltung bewirkt eine relativ große Filteroberfläche. Von der Ausbildung der gefalteten Materialbahn hängt die Stabilität der Materialbahn ab. Aus fertigungstechnischen Gründen läßt sich der Durchmesser derartiger Filterpatronen nicht beliebig klein ausbilden. Im Durchmesser kleine Patronen wären aus Platzersparnisgründen aber wünschenswert, zumal der den gereinigten Abluftstrom bildende Innenraum der Patrone in seiner vorhandenen Größe zum Abführen der gereinigten Abluft nicht voll benötigt wird.

Aus der US-A-3,458,977 sind Filterbahnen bekannt, die entweder längs gemeinsamer Knickkanten oder längs gemeinsamer Flächenbereiche wabenartig aneinanderliegen. Auch von den aus der DE-A-3 304 350 bekannten Filterbahnen sind jeweils zwei Bahnen mit ihren jeweiligen gegenüberliegenden Knickkanten fest miteinander verbunden. In beiden Fällen setzt sich der gemeinsame Platzbedarf der miteinander verbundenen Filterbahnen aus der Summe des von jeder einzelnen Bahn benötigten Platzbedarfes zusammen.

Ferner ist es aus der FR-A-2 324 342 bekannt, einen Filtereinsatz durch Einbringen von Elementen in die zwischen Filterbahnen vorhandenen Hohlräume abzustützen.

### DARSTELLUNG DER ERFINDUNG

Ausgehend von diesem Stand der Technik liegt der Erfindung die Aufgabe zugrunde, ein Filterelement aus textilem, papiernem oder ähnlichem Material anzugeben, das unter Berücksichtigung der erforderlichen Stabilität möglichst platzsparend ausgebildet und einzusetzen ist.

Diese Erfindung ist durch die Merkmale des Hauptanspruchs gegeben. Ausgehend von einem Filterelement aus textilen, papiernen oder ähnlichen Materialbahnen mit zwei balgartig gefalteten Materialbahnen, die übereinanderliegend derart vorhanden sind, daß zwischen ihnen, quer zur Längserstreckung der Materialbahnen, Zwischenräume gebildet sind, wobei die aufeinanderzu gerichteten Bereiche dieser beiden Bahnen miteinander fest verbunden sind, zeichnet sich dieses Filterelement dementsprechend dadurch aus, daß die beiden Bahnen derartig teilweise ineinandergeschachtelt vorhanden sind, daß sie mit gemeinsamen Flächenbereichen aneinanderliegen. Durch die beiden derartig miteinander verbundenen Materialbahnen entsteht ein Filtermantel mit einer gegenüber dem Stand der Technik wesentlich vergrößerten Stabilität. Außerdem lassen sich durch mehr oder weniger weites Ineinanderschieben bzw. Ineinanderschachteln der beiden Bahnen beliebig große Filterzellen gestalten, sowie beliebig große Anlageflächen und damit Klebeflächen herstellen. Dies alles erlaubt einen extrem platzsparenden und trotzdem stabilen Filteraufbau bzw. Filtereinsatz.

Ein in ähnlicher Weise balgartig gefaltetes Filterelement ist aus der DE-A-3 413 213 bekannt. Dieses Filterelement besteht aber aus einem formstabilen, schaumförmigen Formkörper aus Kunststoff, Metall oder Glas, und damit aus einem relativ biegesteifen Material, bei dem die hinsichtlich textilen oder dergleichen Materialbahnen bestehende Problematik nicht auftreten kann.

Das Verbinden der beiden Bahnen erfolgt vorzugsweise durch eine Klebverbindung.

Bei einer "großen" Faltung kann es erforderlich werden, die zwischen den beiden Bahnen vorhandenen Zwischenräume mit Stützelementen auszusteifen. Diese Stützelemente können luftdurchlässig beispielsweise aus einem Drahtgeflecht oder dergleichen bestehen.

Zum Halten der beiden Bahnen im Bereich ihrer jeweiligen gegenüberliegenden Bahn-Längsbereiche können die Bahnen in jeweils einen Kunststoffkörper eingeschweißt werden.

Die erfindungsgemäßen Filterelemente können plattenförmig ausgebildet werden. Die Grundrißform kann dabei beliebig sein und sich so den vorhandenen Einsatzorten und -verhältnissen optimal anpassen. Es ist insbesondere möglich, die Filterkörper mit einer im Querschnitt etwa rechteckförmigen Gestalt auszubilden.

Weitere Ausgestaltungen und Vorteile der Erfindung sind den in den Ansprüchen weiterhin aufgeführten Merkmalen zu entnehmen.

### KURZE BESCHREIBUNG DER ZEICHNUNG

Die Erfindung wird im folgenden anhand der in der Zeichnung dargestellten Ausführungsbeispiele näher beschrieben und erläutert. Es zeigen:
- Fig. 1: eine perspektivische Darstellung eines Filterelements mit einer nicht erfindungsgemäßen Ausführungsform des Filtermediums,
- Fig. 2: den Querschnitt des erfindungsgemäßen Filter mediums.

### WEGE ZUR AUSFÜHRUNG DER ERFINDUNG

Ein Filterelement 10 besteht aus einem oberen Kunststoffkörper 12 und einem unteren Kunststoffkörper 14, in die die gegenüberliegenden jeweiligen beiden Längsränder zweier textiler Bahnen 16, 18 eingeschweißt sind.

Die beiden textilen Bahnen 16, 18 bilden das Filtermedium 19 des Filterelementes 10 und sind balgartig in einer nicht erfindungsgemäßen Art gefaltet.

Die beiden Bahnen 16, 18 liegen mit ihren beiden, einander zugerichteten jeweiligen Knickkanten 20, 22 "linienförmig" aneinander. Längs dieser Knickkanten 20, 22 sind die beiden Bahnen 16, 18 miteinander - etwa mittels einer Klebverbindung - fest verbunden.

Die beiden Bahnen 16, 18 erstrecken sich geradlinig in Längsrichtung L, so daß eine die beiden Bahnen 16, 18 querschnittsmäßig einhüllende Umrißlinie etwa die Gestalt eines Rechteckes aufweist.

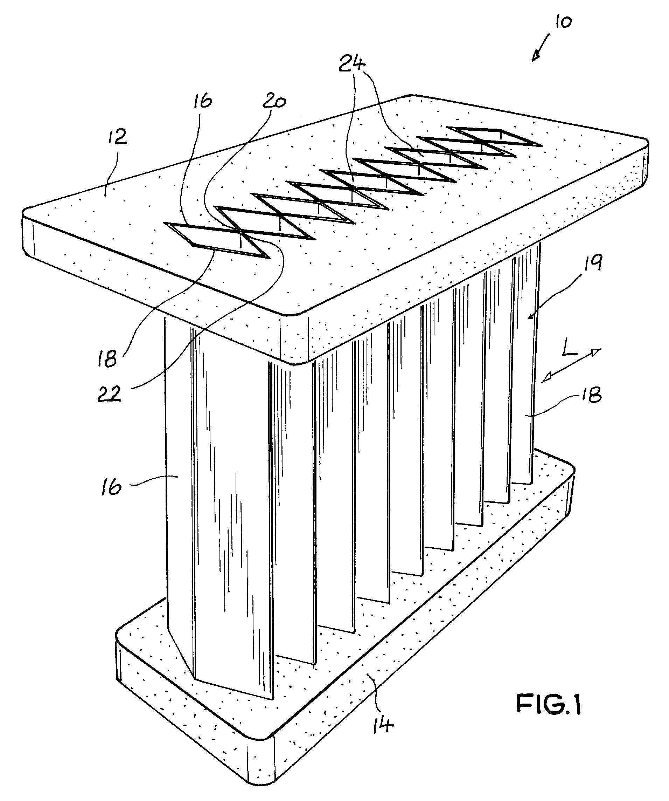

Zwischen den textilen Bahnen 16, 18 sind Zwischenräume 24 vorhanden, die quer zur Längsrichtung L durch das Filtermedium 19 hindurchgehen. Die Zwischenräume 24 haben bei der Ausbildung gemäß Fig. 1 jeweils einen rautenfömigen Querschnitt.

Während die Zwischenräume 24 durch den oberen Kunststoffkörper 12 voll hindurchgehen, sind sie auf der gegenüberliegenden Seite vom unteren Kunststoffkörper 14 verschlossen.

Bei einem derartigen Filterelement strömt das zu reinigende gasförmige Medium von außen gegen die beiden textilen Bahnen 16, 18, wobei sich die in dem gasförmigen Medium vorhandenen Verunreinigungen an der Außenseite der Bahnen absetzen. Das gereinigte gasförmige Medium strömt dann durch die Bahnen 16, 18 hindurch und dann weiter durch die Zwischenräume 24 oben aus dem Kunststoffkörper 12 heraus.

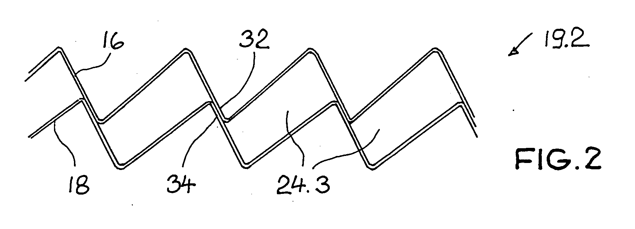

Bei dem in Fig. 2 dargestellten Filtermedium 19.2 weisen die beiden Bahnen 16, 18 eine gleiche Faltung auf. Die beiden Bahnen 16, 18 sind etwas ineinander versetzt angeordnet, so daß aneinanderliegende Flächenbereiche 32 bei der Bahn 16 bzw. 34 bei der Bahn 18 entstehen. Mit diesen Flächenbereichen 32, 34 sind die Bahnen 16, 18 - beispielsweise wieder mittels einer Verklebung - fest miteinander verbunden. Die zwischen den Bahnen 16, 18 dieses Filtermediums 19.3 vorhandenen Zwischenräume 24.3 sind im Querschnitt etwa rechteckförmig, sie können aber ebenso wie die Zwischenräume 24 (Fig. 1) rautenförmig sein. Die Querschnittsform der Zwischenräume hängt von der Art der Faltung beider Bahnen 16, 18 ab.

Das Filtermedium 19 hat den Vorteil, daß das betreffende Filterelement im Querschnitt rechtwinklig hergestellt werden kann. Das erfindungsgemäße Filterelement kann dadurch wie die an sich bekannten Plattenfilter aufgebaut und eingesetzt werden.

## Patentansprüche

1. Filterelement (10) mit aus textilen, papiernen oder ähnlichen balgartig gefalteten Materialbahnen (16, 18) bestehendem Filtermedium (19), wobei
- zwei balgartig gefaltete Materialbahnen (16, 18) übereinanderliegend derart vorhanden sind, daß zwischen ihnen, quer zur Längserstreckung (L) der Materialbahnen, Zwischenräume (24) gebildet sind,
- die aufeinander zugerichteten Bereiche (20, 22; 32, 34;) dieser beiden Bahnen (16, 18) miteinander fest verbunden sind,
**dadurch gekennzeichnet,** daß die beiden Bahnen (16, 18) derartig teilweise ineinandergeschachtelt vorhanden sind, daß sie mit gemeinsamen Flächenbereichen (32, 34) aneinanderliegen.

2. Filterelement nach Anspruch 1,
**dadurch gekennzeichnet,** daß zwischen den beiden Bahnen (16, 18) Stützelemente vorhanden sind, die die zwischen denselben vorhandenen Hohlräume (24) zumindest teilweise ausfüllen.

3. Filterelement nach einem der Ansprüche 1 und 2,
**dadurch gekennzeichnet,** daß die fest miteinander verbundenen beiden Materialbahnen (16, 18) an ihren jeweiligen gegenüberliegenden Bahn-Längsbereichen ortsfest in dem Filterelement (10) gehalten sind.

4. Filterelement nach Anspruch 3,
**dadurch gekennzeichnet,** daß die beiden Materialbahnen (16, 18) an ihren jeweiligen gegenüberliegenden Bahn-Längsbereichen in jeweils einem Kunststoffkörper (12, 14) eingeschweißt vorhanden sind.

5. Filterelement nach Anspruch 3,
**dadurch gekennzeichnet,** daß die die beiden Bahnen (16, 18) querschnittsmäßig einhüllende Umrißlinie in etwa ein Rechteck ist, so daß das Filterelement (10) eine in etwa plattenförmige Gestalt hat.

## Claims

1. Filter element (10) with a filter medium (19) consisting of material strips (16, 18) of textile, paper or similar material folded in the manner of bellows, in which
- two material strips (16, 18), which are folded in the manner of bellows, are superimposed in such a manner that intermediate spaces (24) are formed between them transversely to the longitudinal extension (L) of the material strips,
- those regions (20, 22; 32, 34;) of these two strips (16, 18) which face towards one another are firmly inter-connected, characterised in that the two strips (16, 18) are partially inserted into one another in such a manner that they lie against one another with common surface regions (32, 34).

2. Filter element according to Claim 1, characterised in that support elements are present between the two strips (16, 18), which at least partially fill the cavities (24) present between the same.

3. Filter element according to one of Claims 1 and 2, characterised in that the two firmly interconnected material strips (16, 18) are held stationary in the filter element (10) in their respective opposite longitudinal strip regions.

4. Filter element according to Claim 3, characterised in that the two material strips (16, 18) are respectively welded into a plastic member (12, 14) in their respective opposite longitudinal strip regions.

5. Filter element according to Claim 3, characterised in that the contour which cross-sectionally encloses the two strips (16, 18) is approximately a rectangle, so that the filter element (10) has an approximately plate-like shape.

## Revendications

1. Elément de filtration (10) avec agent filtrant (19) constitué de bandes (16, 18) de matière textile, papier ou similaire pliées en accordéon, tandis que
- deux bandes de matière pliées en accordéon sont disposées l'une sur l'autre de telle sorte qu'entre elles apparaissent des espaces intermédiaires (24) transversaux à l'extension longitudinale (L) des bandes de matière,
- les parties (20, 22; 32, 34) tournées l'une vers l'autre de ces deux bandes (16, 18) sont rigidement assemblées l'une à l'autre,
caractérisé en ce que les deux bandes (16, 18) sont partiellement emboîtées l'une dans l'autre de telle sorte qu'elles reposent l'une contre l'autre par des parties communes (32, 34) de leur surface.

2. Elément de filtration selon la revendication 1, caractérisé en ce qu'entre les bandes (16, 18) sont présents des éléments de soutien qui remplissent au moins partiellement les espaces creux (24) prévus entre ceux-ci.

3. Elément de filtration selon l'une des revendications 1 et 2, caractérisé en ce que les deux bandes (16, 18) de matière reliées rigidement l'une à l'autre sont immobilisées dans l'élément de filtration (10) sur chacune de leurs parties opposées dans le sens de leur longueur.

4. Elément de filtration selon la revendication 3, caractérisé en ce que les deux bandes de matière (16, 18) sont soudées dans un élément (12, 14) en matière synthétique par chacune de leurs parties opposées dans le sens de leur longueur.

5. Elément de filtration selon la revendication 3, caractérisé en ce que la ligne du contour englobant en section transversale les deux bandes (16, 18) forme sensiblement un rectangle, de sorte que l'élément de filtration (10) possède sensiblement la forme d'une plaque.
